# EUROPÄISCHE PATENTANMELDUNG

(11) **EP 2 481 919 A1**
(43) Veröffentlichungstag der Anmeldung: **01.08.2012**
(21) Anmeldenummer: 11152550.7
(22) Anmeldetag: 28.01.2011
(51) Int. Cl.: F03D 7/02, F03D 7/04, F03D 11/00, G01S 7/41

(54) **Verfahren zum Betreiben einer Windenergieanlage, Anordnung und System**

(71) Anmelder: Nordex Energy GmbH, 18059 Rostock (DE)
(72) Erfinder: Steinmetz, Guillaume, 93210 La Plaine Saint-Denis (FR); Harms, Ulrich, 22399 Hamburg (DE); Arlt, Volker, 27299 Langwedel (DE); Hose, Gerd, 24211 Preetz (DE)
(74) Vertreter: Epping - Hermann - Fischer

(57) **Zusammenfassung**

Ein Verfahren zum Betreiben einer Windenergieanlage (100), umfasst:
- Bereitstellen der Windenergieanlage (100) mit einer länglich ausgedehnte Standvorrichtung (102), einem Generator (104), der mit einer Rotorwelle (105) gekoppelt ist, und einem über eine Rotornabe (106) mit der Rotorwelle (105) gekoppelten Rotor (109);
- Bereitstellen einer Information über einen Betriebsparameter der Windenergieanlage (100) für ein Radarsystem (111), wobei die Windenergieanlage (100) unabhängig von dem Radarsystem (111) betrieben wird.

## Beschreibung

### Gebiet der Erfindung

Die Erfindung betrifft ein Verfahren zum Betreiben einer Windenergieanlage. Weiterhin betrifft die Erfindung eine Anordnung mit einer Windenergieanlage sowie ein System aus einer solchen Anordnung und einem Radarsystem, insbesondere einem Wetterradarsystem oder einem Flugsicherungsradarsystem.

Wetterradarsysteme werden verwendet, um Niederschlag, Intensität und die Bewegung von Niederschlagssystemen zu detektieren, die Art des Niederschlags zu bestimmen (beispielsweise Regen, Schnee, Hagel), sowie Vorhersagen über die zeitliche und räumliche Entwicklung von Niederschlagssystemen zu treffen. Flugsicherungsradarsysteme werden zur Überwachung des Flugverkehrs eingesetzt.

Radarsysteme emittieren gerichtete Primärsignale gepulster elektromagnetischer Strahlung im S-Band bzw. L-Band des Mikrowellenbereiches. Die Primärsignale werden mittels eines Impuls-Magnetrons oder einer Klystron-Röhre erzeugt, die über einen Wellenleiter mit einer Parabolantenne verbunden ist, die sowohl als Sende- als auch als Empfangsvorrichtung vorgesehen ist. Die elektromagnetischen Pulse breiten sich gerichtet von der Radarstation radial in einem Raumwinkel θ aus und werden an sich in diesem Raumwinkel befindenden Objekten wie Niederschlagssystemen, Geländeerhebungen, Flugzeugen, oder anderen anthropogenen Objekten reflektiert. Zwischen den einzelnen Pulsen dient die Radarstation als Empfänger für reflektierte Sekundärsignale. Der horizontale Abstand eines reflektierenden Objekts kann aus der Laufzeit der reflektierten, sich mit Lichtgeschwindigkeit im Pulsvolumen ausbreitenden elektromagnetischen Welle bestimmt werden. Aus der Phasenverschiebung der zurückgestreuten Sekundärsignale aufeinander folgender Pulse kann zudem die Geschwindigkeit von reflektierenden Objekten abgeleitet werden ((Puls)-Doppler-Radar). Die radiale Doppler-Geschwindigkeit des Streuers ergibt sich dabei aus der Korrelation der Intensitäten
aufeinander folgend detektierter Sekundärpulse. Die Tangentialgeschwindigkeit des Streuers bezüglich der Radarstation lässt sich aus der radialen Projektion der Tangentialgeschwindigkeit aus in benachbarten Winkelbereichen erfassten Streusignalen ableiten.

Windenergieanlagen können sich nachteilig auf die Auswertegenauigkeit von Radarsystemen auswirken. Durch die Rotationsbewegung der Rotorblätter und das sich windabhängig ändernde Profil erzeugen Windenergieanlagen Streusignale, die von Radarsystemen fehlinterpretiert werden können. Werden Windenergieanlagen gemäß einer Windrichtung ausgerichtet, welche um 90° bezüglich der Einfallsrichtung eines Radar-Pulses gedreht liegt, können durch die Streuung an den sich bewegenden Rotorblättern Dubletten von
Geschwindigkeitssignaturen entstehen, die natürlichen Wettergegebenheiten ähneln und in kritischen
Wettersituationen zu Fehlinterpretationen und ungenauen kurzfristigen Wettervorhersagen führen können. Ferner werden bezüglich der Einfallsrichtung leewärts befindliche Wettersysteme durch Windenergieanlagen verdeckt, was zu einer Abschwächung der Intensität der Sekundärsignale solcher Wettersysteme führt und diese bezüglich ihrer Niederschlagsintensität schlechter bewertbar macht. Ebenso wirken sich derartige Störsignale nachteilig auf die Erkennung von Flugzeugen und der Bestimmung ihrer Flugbahnen aus.

Die WO 2009/100059 A1 beschreibt ein Steuerungssystem für die Abschwächung der Auswirkung von Windenergieanlagen auf Radarsysteme sowie eine Methode zu dessen Betrieb. Das Steuerungssystem hat die Aufgabe, Daten über die Betriebszustände einer Radaranlage sowie einer Windenergieanlage zu verarbeiten und Steuersignale für die Betriebsführung der Windenergieanlage zu generieren. Durch die Steuerung der Windenergieanlage durch das Steuerungssystem kann diese in einer Art und Weise betrieben werden, durch welche das Radarsystem nur geringfügig in seiner Funktionalität eingeschränkt wird. Dabei wird direkt durch das Radarsystem in den Betrieb der Windenergieanlage eingegriffen. Dabei wird die Windenergieanlage auch außerhalb der optimalen Effektivität betrieben, wenn dadurch das Radarsystem weniger beeinflusst wird.

Es ist wünschenswert, ein Verfahren zum Betreiben einer Windenergieanlage anzugeben, mit dem die Windenergieanlage effektiv betreibbar und gleichzeitig das Radarsystem wenig beeinflusst ist. Es ist weiterhin wünschenswert, eine Anordnung mit einer solchen Windenergieanlage anzugeben, die eingerichtet ist das Verfahren auszuführen. Weiterhin ist es wünschenswert, ein System anzugeben, das eine solche Anordnung und ein Radarsystem umfasst, so dass die Anordnung das Radarsystem wenig beeinflusst. Insbesondere umfasst das System eine Mehrzahl solcher Anordnungen.

In einer Ausführungsform der Erfindung umfasst ein Verfahren zum Betreiben einer Windenergieanlage ein Bereitstellen der Windenergieanlage. Die Windenergieanlage weist eine länglich ausgedehnte Standvorrichtung, zum Beispiel einen Turm, sowie einen Generator auf, der mit einer Rotorwelle gekoppelt ist. Über eine Rotornabe ist ein Rotor mit der Rotorwelle gekoppelt. Eine Information über einen Betriebsparameter der Windenergieanlage wird für ein Radarsystem bereitgestellt. Die Windenergieanlage wird unabhängig von dem Radarsystem betrieben.

Die Information über den Betriebsparameter, die insbesondere von einer Steuervorrichtung für die Windenergieanlage ermittelt wird, wird dem Radarsystem zur Verfügung gestellt, so dass dieses Beeinflussungen durch den Betrieb der Windenergieanlage reduzieren kann. Dabei wird die Windenergieanlage nicht von dem Radarsystem beeinflusst, beispielsweise ist die Ausrichtung der Rotornabe abhängig von einer ermittelten Windrichtung und unabhängig davon, ob das Radarsystem von dieser Ausrichtung besonders gestört wird, so dass die Windenergieanlage möglichst effizient arbeitet.

In Ausführungsformen wird der Betriebsparameter zusammen mit einer absoluten Zeitinformation, die von einem bereitgestellten Uhrzeitsignal abhängig ist, bereitgestellt. So ist eine zuverlässige Interpretation der bereitgestellten Information möglich.

Der Betriebsparameter umfasst mindestens einen der folgenden Werte: die Position eines Rotorblatts des Rotors in der Rotationsebene des Rotors, die
Rotorumdrehungsgeschwindigkeit, den Einstellwinkel des Rotorblatts, die Ausrichtung der Rotorwelle, die Änderung des Einstellwinkels des Rotorblatts mit der Zeit und der Änderung der Ausrichtung der Rotorwelle mit der Zeit. In weiteren Ausführungsformen werden Informationen über weitere Betriebsparameter bereitgestellt. Insbesondere werden Informationen über solche Betriebsparameter bereitgestellt, die Einfluss auf den Betrieb des Radarsystems haben.

In Ausführungsformen wird die Information über den Betriebsparameter dem Radarsystem durch die Steuervorrichtung der Windenergieanlage unmittelbar zur Verfügung gestellt. Die Information ist derart, dass das Radarsystem diese direkt empfangen und weiterverarbeiten kann. In weiteren Ausführungsformen wird die Information über den Betriebszustand einem zentralen System bereitgestellt, beispielsweise einem System zur Überwachung, Steuerung und/oder Datenerfassung eines Windparks mit mehreren Windenergieanlagen, das wiederum die Information einem Radarsystem zur Verfügung stellt.

In einer Ausführungsform umfasst eine Anordnung die Windenergieanlage und eine Steuervorrichtung für die Windenergieanlage, die eingerichtet ist, Verfahrensschritte des Verfahrens gemäß den beschriebenen Ausführungsformen auszuführen. Die Windenergieanlage ist unabhängig von dem Radarsystem betreibbar. In weiteren Ausführungsformen ist ein zentrales System zur Überwachung, Steuerung und/oder Datenerfassung eines Windparks angeordnet, das eingerichtet ist, Verfahrensschritte des Verfahrens gemäß den beschriebenen Ausführungsformen auszuführen.

Eine solche Windenergieanlage ist im Wirkbereich eines Radarsystems effektiv betreibbar, da beispielsweise die Ausrichtung der Rotornabe in Abhängigkeit von einer ermittelten Windrichtung so eingestellt wird, dass die Windenergieanlage möglichst effektiv arbeitet, unabhängig, ob das Radarsystem hiervon beeinflussbar ist.

In einer Ausführungsform umfasst ein System eine solche Anordnung und das Radarsystem. Das Radarsystem ist eingerichtet, in Abhängigkeit von der von der Anordnung bereitgestellten Information betrieben zu werden, wobei die Windenergieanlage in einem Wirkbereich des Radarsystems angeordnet ist.

Insbesondere ist das Radarsystem ein Wetterradarsystem oder ein Flugsicherungsradarsystem. Das Radarsystem ist insbesondere eingerichtet, die von der Anordnung bereitgestellten Informationen zu empfangen. In Abhängigkeit von den durch die Anordnung bereitgestellten Informationen ist das Radarsystem eingerichtet, die von der Windenergieanlage verursachten Störsignale zu filtern.

### Kurze Beschreibung der Zeichnung

Weitere Vorteile, Merkmale und Weiterbildungen ergeben sich aus den nachfolgenden in Verbindung mit der Figur erläuterten Beispielen. Die dargestellten Elemente und deren Größenverhältnisse zueinander sind grundsätzlich nicht als maßstabsgerecht anzusehen.

Die Figur zeigt eine schematische Darstellung eines Systems mit einer Windenergieanlage.

Detaillierte Beschreibung von Ausführungsformen

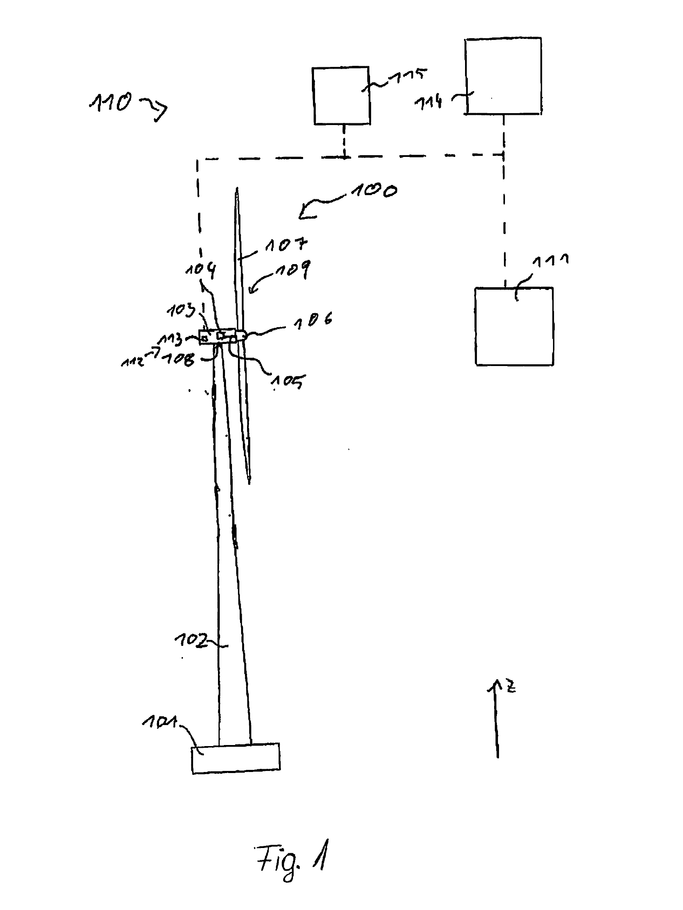

Die Figur zeigt ein System 110 mit einer Windenergieanlage 100. Die Windenergieanlage weist ein Fundament 101 auf, mittels dem die Windenergieanlage auf einem Untergrund befestigt ist. Mit dem Fundament ist eine Standvorrichtung 102 gekoppelt. Die Standvorrichtung 102 ist in Z-Richtung der Figur 1 länglich ausgedehnt. Die Standvorrichtung 102 ist insbesondere ein Turm, beispielsweise ausgeführt als Stahlrohr-, Spannbeton-, Fachwerk- oder Sandwichturm.

An einem dem Fundament 101 gegenüberliegenden Ende 108 der Standvorrichtung 102 ist ein Maschinenhaus 103 angeordnet. Das Maschinenhaus umfasst einen Generator 104, der über eine Rotorwelle 105 mit einem Rotor 109 gekoppelt ist. Insbesondere ist die Rotorwelle 105 mit einer Rotornabe 106 des Rotors 109 gekoppelt. Der Rotor 109 weist weiterhin ein Rotorblatt 107 beziehungsweise eine Mehrzahl von Rotorblättern 107 auf, die mit der Rotornabe 106 gekoppelt sind. Der Rotor 109 wird in Betrieb durch Wind in Rotation versetzt und diese Rotation über die Rotorwelle 105 zu dem Generator 104 übertragen, der die kinetische Energie des Rotors 109 in elektrische Energie umwandelt.

Das Maschinenhaus 103 ist mit der Standvorrichtung 102 so gekoppelt, dass das Maschinenhaus mit dem Rotor um die Längsachse der Standvorrichtung 102 drehbar ist. Das Maschinenhaus 103 ist über eine Azimutdrehverbindung (nicht gezeigt) drehbar auf der Standvorrichtung 102 gelagert, so dass das Maschinenhaus 103 und damit auch die Rotorwelle 105 und insbesondere die Längsachse der Rotorwelle 105 in ihrer horizontalen Ausrichtung der Windrichtung nachgeführt werden kann. Dadurch ist es möglich, das Maschinenhaus 103 und insbesondere den Rotor 109 in Abhängigkeit von einer gemessenen Windrichtung 127 so auszurichten, dass eine hohe Effizienz bei der Umwandlung der Windenergie in elektrische Energie mittels des Generators 104 erreicht wird. Insbesondere wird das Maschinenhaus 103 so ausgerichtet, dass die Rotorwelle 105, insbesondere die Längsachse der Rotorwelle 105, in Richtung der gemessenen Windrichtung zeigt. Für die Nachführung gibt die Steuervorrichtung 113 ein Steuerungssignal an eine Azimutantriebsvorrichtung (nicht gezeigt) weiter. Dabei kann das Signal beispielsweise direkt an einen Frequenzumrichter weitergegeben werden, über den ein Azimutantrieb gespeist wird.

Zur Ausrichtung des Rotors ist eine Steuervorrichtung 113 angeordnet, die eingerichtet ist, in Abhängigkeit von der gemessenen Windrichtung 127 eine Ausrichtung des Rotors zu erwirken. Die Steuervorrichtung 113 ist in Ausführungsformen Teil einer Anordnung 112, die die Steuervorrichtung 113 und eine Windenergieanlage 100 aufweist.

Weiterhin ist die Steuervorrichtung 113 eingerichtet, einen oder mehrere Betriebsparameter der Windenergieanlage zu ermitteln. In Ausführungsformen umfassen die
Betriebsparameter mindestens eines aus:
- einer Position des Rotorblatts 107 in der Rotationsebene des Rotors 109,
- eine Umdrehungsgeschwindigkeit des Rotors 109,
- einen Einstellwinkel wenigstens eines Rotorblatts 107, also den Winkel, um den das Rotorblatt 107 um seine Längsachse gedreht ist,
- eine Ausrichtung der Rotorwelle 105, die insbesondere abhängig von einer an der Windenergieanlage 100 ermittelten Windrichtung ist,
- eine Änderung des Einstellwinkels wenigstens eines Rotorblatts 107 mit der Zeit, also die Geschwindigkeit, mit der das Rotorblatt 107 um seine Längsachse gedreht wird,
- eine Änderung der Ausrichtung der Rotorwelle 105 mit der Zeit, also die Geschwindigkeit, mit der die Rotorwelle 105 ausgerichtet wird, also die Änderung des Azimutwinkels mit der Zeit, folglich die Geschwindigkeit, mit der das Maschinenhaus 103 durch den Azimutantrieb gedreht wird.

Insbesondere umfassen die Betriebsparameter die Umdrehungsgeschwindigkeit des Rotors 109 und die Ausrichtung der Rotorwelle 105, da diese Parameter für die Filterung des Radarsystems besonders wichtig sind. Die Betriebsparameter umfassen in Ausführungsformen die Ausrichtung der Rotationsachse des Rotors, insbesondere bei Windenergieanlagen, bei denen der Rotor nicht über eine Rotorwelle mit dem Generator gekoppelt ist.

Die Steuervorrichtung 113 ist eingerichtet, Informationen über die Betriebsparameter insbesondere für ein Radarsystem 111 bereitzustellen. Die Informationen umfassen insbesondere jeweilige Werte der Betriebsparameter.

In weiteren Ausführungsformen werden statische Informationen über die Windenergieanlage bereitgestellt, beispielsweise Bauart und/oder Position der Windenergieanlage 100. Diese Informationen werden in Ausführungsformen von dem Radarsystem 111 beziehungsweise einem zentralen System 114 gespeichert.

Das System 110 umfasst weiterhin das Radarsystem 111. Das Radarsystem 111 ist beispielsweise eingerichtet, um Niederschlag, die Intensität und die Bewegung von Niederschlagssystemen zu detektieren, die Art des Niederschlags zu bestimmen (beispielsweise Regen, Schnee, Hagel) sowie Vorhersagen über die zeitliche und räumliche Entwicklung von Niederschlagssystemen zu treffen. Das Radarsystem 111 kann aber auch als Flugsicherungsradarsystem zur Überwachung des Flugverkehrs eingerichtet sein. Das Radarsystem weist eine Vorrichtung zur elektronischen Verarbeitung der bereitgestellten Informationen, insbesondere zur Filterung in Abhängigkeit von den bereitgestellten Informationen auf.

Das Radarsystem 111 ist weiterhin eingerichtet, die von der Windenergieanlage 100 bereitgestellten Informationen über den Betriebsparameter oder über mehrere Betriebsparameter der Windenergieanlage 100 zu empfangen. In weiteren Ausführungsformen ist das Radarsystem 111 eingerichtet, die bereitgestellten Informationen über den Betriebsparameter oder über mehrere Betriebsparameter von einer Mehrzahl von Windenergieanlagen 100 zu empfangen.

In Ausführungsformen empfängt das Radarsystem 111 die Information mittelbar über das zentrale System 114, beispielsweise einem Steuersystem eines
Windenergieanlagenparks. Der Windenergieanlagenpark umfasst eine Mehrzahl von Windenergieanlagen 100, die jeweils mit dem zentralen System 114 gekoppelt sind und dem zentralen System 114 die Informationen über die jeweiligen Betriebsparameter bereitstellen.

In weiteren Ausführungsformen werden die Informationen über die Betriebsparameter von der Windenergieanlage 100 unmittelbar dem Radarsystem 111 zur Verfügung gestellt, insbesondere ohne Vermittlung des zentralen Systems 114. Das Radarsystem 111 ist insbesondere eingerichtet, von einer Mehrzahl von Windenergieanlagen 100 bereitgestellte Informationen zu empfangen.

Um die Genauigkeit der Auswertung der Radarsignale zu erhöhen, ist das Radarsystem 111 eingerichtet, die empfangene reflektierte Radarstrahlung in Abhängigkeit von den Informationen über die Betriebsparameter auszuwerten. Insbesondere ist das Radarsystem 111 eingerichtet, in Abhängigkeit von den Betriebsparametern der Windenergieanlage verursachte Muster in der empfangenen Radarstrahlung zu erkennen, zu filtern und richtig zu interpretieren. Dazu weist das Radarsystem eine Vorrichtung zur elektronischen Verarbeitung der bereitgestellten Informationen auf, insbesondere zur Filterung der reflektierten Strahlung in Abhängigkeit von den bereitgestellten Informationen. Das Radarsystem ist eingerichtet, in Abhängigkeit von den bereitgestellten Informationen von der Windenergieanlage verursachte Störsignale zu filtern und beispielsweise bei der Bestimmung von Niederschlagssystemen und der Vorhersage über die zeitliche und räumliche Entwicklung von Niederschlagssystemen nicht zu verwerten. Das Radarsystem ist eingerichtet, die Bestimmung von Niederschlagssystemen und Vorhersage über die zeitliche und räumliche Entwicklung von Niederschlagssystemen durchzuführen und dabei die durch die Windenergieanlage verursachten Störungen außer Acht zu lassen.

In Ausführungsformen ist ein Zeitzeichensystem 115 vorgesehen, das ein Uhrzeitsignal mit einer absoluten Uhrzeit bereitstellt. Insbesondere ist das Zeitzeichensystem 115 eines, das eingerichtet ist, ein Uhrzeitsignal aus GPS, DCF77, MSF60, WWV, WWVB, WWVH, JJY, BPC, BPN, TDF, CHU oder aus einem anderen Zeitzeichensystem zu empfangen. Das Uhrzeitsignal des Zeitzeichensystems 115 wird der Windenergieanlage 100 und dem Radarsystem 111 bereitgestellt. Die Windenergieanlage 100 ist eingerichtet, das Uhrzeitsignal zu empfangen. Insbesondere ist die Steuervorrichtung 113 dazu eingerichtet und weist dazu ein Zeitzeichenempfangssystem auf. Die Windenergieanlage 100 ist eingerichtet, die Information über die Betriebsparameter in Abhängigkeit von dem empfangenen Uhrzeitsignal bereitzustellen. Insbesondere wird die Information über den Betriebsparameter zusammen mit einer absoluten Zeitinformation zur Verfügung gestellt, also zu welchem Zeitpunkt welche Werte der Betriebsparameter vorliegen.

Das Radarsystem 111, das ebenfalls das Uhrzeitsignal empfängt und dazu ein Zeitzeichenempfangssystem aufweist, ist eingerichtet, die Informationen, die von der Windenergieanlage zusammen mit der absoluten Zeitinformation bereitgestellt werden, auszuwerten, so dass das Radarsystem 111 Informationen hat, zu welchem Zeitpunkt welcher Betriebsparameter vorliegt. In weiteren Ausführungsformen wird das Uhrzeitsignal von der Windenergieanlage 100, dem zentralen System 114 oder dem Radarsystem 111 bereitgestellt, das dazu ein Zeitzeichenempfangssystem aufweist.

In weiteren Ausführungsformen ist das zentrale System 114, das ebenfalls das Uhrzeitsignal empfängt und dazu ein Zeitzeichenempfangssystem aufweist, eingerichtet, die von den einzelnen Windenergieanlagen 110 zur Verfügung gestellten Informationen mit einer absoluten Zeitinformation zu verbinden. Die Informationen der Windenergieanlagen werden dann gemeinsam mit der absoluten Zeitinformation für das Radarsystem bereitgestellt. In weiteren Ausführungsformen stellt das zentrale System 114 das Uhrzeitsignal bereit, das von den einzelnen Windenergieanlagen empfangen wird. Die Windenergieanlagen stellen dem zentralen System 114 die Informationen über den Betriebszustand zusammen mit der absoluten Zeitinformation bereit, um diese an das Radarsystem 111 weiterzugeben.

In weiteren Ausführungsformen weist entweder das zentrale System 114 ein Zeitzeichenempfangssystem auf, welches das Uhrzeitsignal empfängt und den Windenergieanlagen 110 zur Verfügung stellt oder eine der Windenergieanlagen 110 verfügt über das Zeitzeichenempfangssystem, das das Uhrzeitsignal dem zentralen System 114 bereit stellt und welches wiederum das Uhrzeitsignal an die anderen Windenergieanlagen 110 verteilt.

In weiteren Ausführungsformen weist jede Windenergieanlage 110 ein eigenes Zeitzeichenempfangssystem auf. Auf diese Weise werden Fehler durch die Verteilung des Uhrzeitsignals vermieden.

In weiteren Ausführungsformen wird das Uhrzeitsignal einer oder mehreren Windenergieanlagen 110 oder einem zentralen System 114 durch das Radarsystem 111 zur Verfügung gestellt. In weiteren Ausführungsformen wird eine durch das Radarsystem frei gewählte Zeitreferenz vorgegeben.

Insbesondere wird die Information über den Betriebsparameter in einem Zeitabstand von 10 Millisekunden erfasst. In weiteren Ausführungsformen werden die Informationen über die Betriebsparameter in anderen Zeitabständen erfasst, beispielsweise in längeren oder kürzeren Abständen als 10 Millisekunden. Werden die Informationen über den Betriebsparameter über ein Echtzeitnetzwerk übertragen, ist eine Filterung der Radarsignale in Echtzeit möglich. In weiteren Ausführungsformen, in denen die Signale Durchlaufzeiten in der Windenergieanlage aufweisen und Laufzeitverzögerungen bei der Kommunikation mit dem Radarsystem 111 vorliegen, werden Störungen in den Radarsignalen durch die Windenergieanlage nachträglich in dem Radarsystem 111 gefiltert.

In Ausführungsformen, in denen Laufzeitverzögerungen bei der Kommunikation zwischen der Windenergieanlage und dem zentralen System 114 vorliegen, ist das zentrale System 114 eingerichtet, die Informationen in Abhängigkeit von diesen Laufzeitverzögerungen dem Radarsystem bereitzustellen. Beispielsweise empfängt das Radarsystem die Information über den Betriebszustand von der Windenergieanlage mit einer bekannten Zeitverzögerung, die dem zentralen System 114 vorgegeben ist, insbesondere in dem zentralen System 114 gespeichert ist. Das zentrale System 114 verringert beispielsweise die aktuelle Uhrzeit zum Zeitpunkt des Empfangs um die vorgegebene Zeitverzögerung und stellt dem Radarsystem die verringerte Uhrzeit zusammen mit der Information über den Betriebsparameter bereit.

In weiteren Ausführungsformen werden die Informationen über die Betriebsparameter der Windenergieanlage 100 von dem zentralen System 114 bereitgestellt und von dem Radarsystem 111 werden nur die Informationen von dem zentralen System abgerufen, die für den störungsfreien Betrieb des Radarsystems 111 notwendig sind. Beispielsweise werden Datensätze bereitgestellt, die jeweils einen Wert von einem oder mehreren Betriebsparametern zusammen mit einer Zeitinformation, wann dieser Wert vorliegt, umfassen. Der Vorteil, der sich daraus ergibt, ist der, dass bei einem solchen Verfahren nur die benötigten Daten abgerufen werden. Ist die Radaranlage beispielsweise vorübergehend nicht auf die Windenergieanlage 100 gerichtet, müssen so nicht unnötig große Datenmengen ausgetauscht werden.

In weiteren Ausführungsformen wird berücksichtigt, wenn ein Fehler vorliegt. Beispielsweise kann es passieren, dass eine der Windenergieanlagen wegen einer Störung keine Information zu einem der Parameter bereitstellen kann. Auch kann die Kommunikation zwischen einer der Windenergieanlagen und dem zentralen System gestört sein, so dass für eine der Windenergieanlagen eines Parks keine oder nur unvollständige Informationen vorliegen. In diesen Fällen wird beispielsweise der zuletzt bereitgestellte Wert erneut bereitgestellt. Das ist insbesondere sinnvoll für Betriebsparameter wie die Ausrichtung der Rotorwelle 105, die weniger stark zeitlichen Änderungen unterworfen sind. Alternativ oder zusätzlich wird dem Radarsystem ein Fehlerzustand gemeldet.

Durch das Bereitstellen der Informationen über den Betrieb der Windenergieanlage 100 ist es möglich, das Radarsystem 111 verlässlich zu betreiben, da Störinformationen, die durch den Betrieb der Windenergieanlage 100 verursacht werden, von tatsächlichen Wetterinformationen unterscheidbar sind beziehungsweise von tatsächlichen Flugzeugen. Gleichzeitig ist es möglich, die Windenergieanlage 100 so zu betreiben, dass die Umwandlung der Windenergie in elektrische Energie möglichst effizient ist, ohne auf den Betrieb des Radarsystems 111 Rücksicht zu nehmen. Insbesondere werden die Betriebsparameter so eingestellt, dass ein möglichst effektiver Betrieb der Windenergieanlage in Abhängigkeit von den Windverhältnissen an der Windenergieanlage vorliegt, insbesondere die Ausrichtung der Rotorwelle 105 und des Einstellwinkels des Rotorblatts 107. Dies erfolgt unabhängig von dem Betrieb des Radarsystems 111 und insbesondere hat das Radarsystem 111 keine Möglichkeit, den Betrieb der Windenergieanlage 110 zu beeinflussen.

## Patentansprüche

1. Verfahren zum Betreiben einer Windenergieanlage (100), umfassend:
- Bereitstellen der Windenergieanlage (100) mit einer länglich ausgedehnte Standvorrichtung (102), einem Generator (104), der mit einer Rotorwelle (105) gekoppelt ist, und einem über eine Rotornabe (106) mit der Rotorwelle (105) gekoppelten Rotor (109);
- Bereitstellen einer Information über mindestens einen Betriebsparameter der Windenergieanlage (100) für ein Radarsystem (111), wobei die Windenergieanlage (100) unabhängig von dem Radarsystem (111) betrieben wird.

2. Verfahren nach Anspruch 1, umfassend:
- Bereitstellen eines Uhrzeitsignals, das eine absolute Uhrzeit umfasst,
- Bereitstellen der Information über den mindestens einen Betriebsparameter zusammen mit einer absoluten Zeitinformation, die von dem Uhrzeitsignal abhängig ist.

3. Verfahren nach Anspruch 2, bei dem die Information über den mindestens einen Betriebsparameter zusammen mit der absoluten Zeitinformation in Echtzeit übermittelt wird.

4. Verfahren nach Anspruch 2, bei dem die Information über den mindestens einen Betriebsparameter zusammen mit einer absoluten Zeitinformation verzögert übermittelt wird, wobei die Information in Abhängigkeit von der Verzögerung bereitgestellt wird.

5. Verfahren nach Anspruch 4, bei dem eine Information über die Verzögerung beim Bereitstellen der Information bereitgestellt wird.

6. Verfahren nach einem der Ansprüche 1 bis 5, bei dem der mindestens eine Betriebsparameter mindestens einen der folgenden Werte umfassen:
- eine Position eines Rotorblatts (107) des Rotors (109) in der Rotationsebene des Rotors (109),
- eine Rotorumdrehungsgeschwindigkeit,
- ein Einstellwinkel des Rotorblatts (107),
- eine Ausrichtung der Rotorwelle (105) um die Längsachse der Standvorrichtung (102),
- eine Änderung des Einstellwinkels des Rotorblatts (107) mit der Zeit und
- eine Änderung der Ausrichtung der Rotorwelle (105) mit der Zeit.

7. Verfahren nach einem der Ansprüche 1 bis 6, umfassend:
- Bereitstellen einer Information über die Position der Windenergieanlage (100) relativ zu dem Radarsystem (111).

8. Verfahren nach einem der Ansprüche 1 bis 7, umfassend:
- Bereitstellen einer Information über die Bauart der Windenergieanlage (100).

9. Verfahren nach einem der Ansprüche 1 bis 8, bei dem die Information unmittelbar durch eine Steuervorrichtung (113) der Windenergieanlage (100) für das Radarsystem (111) bereitgestellt wird.

10. Verfahren nach einem der Ansprüche 1 bis 8, bei dem die Information durch eine Steuervorrichtung (113) der Windenergieanlage (100) für ein zentrales System (114) bereitgestellt wird, das wiederum die Information für das Radarsystem (111) bereitstellt.

11. Anordnung, umfassend:
- eine Windenergieanlage (100) mit
- einer länglich ausgedehnten Standvorrichtung (102),
- einem drehbar auf der Standvorrichtung (102) gelagerten Generator (104), der mit einer Rotorwelle (105) gekoppelt ist, und
- einem über eine Rotornabe (106) mit der Rotorwelle (105) gekoppelten Rotor (109);
- eine Steuervorrichtung (113) für die Windenergieanlage (110), die eingerichtet ist zum Bereitstellen einer Information über mindestens einen Betriebsparameter der Windenergieanlage (100) für ein Radarsystem (111), wobei
- die Windenergieanlage (100) unabhängig von dem Radarsystem (111) betreibbar ist.

12. System, umfassend:
- eine Anordnung (112) nach Anspruch 11,
- ein Radarsystem (111), das eingerichtet ist in Abhängigkeit von von der Anordnung (112) bereitgestellten Informationen betrieben zu werden, wobei die Windenergieanlage (100) in einem Wirkbereich des Radarsystems (111) angeordnet ist.

13. System nach Anspruch 12, bei dem das Radarsystem (111) eine Vorrichtung umfasst, die eingerichtet ist in Abhängigkeit von den bereitgestellten Informationen von der Windenergieanlage verursachte Störsignale zu filtern.

14. System nach einem der Ansprüche 12 oder 13, umfassend ein zentrales System (114), das eingerichtet ist, die durch eine Steuervorrichtung (113) der Windenergieanlage (100) bereitgestellten Informationen zu empfangen und dem Radarsystem (111) bereitzustellen.

15. System nach Anspruch 14, bei dem von dem Radarsystem 111 von dem zentralen System (114) nur die Informationen abgerufen werden, die für den störungsfreien Betrieb des Radarsystems 111 notwendig sind.
